(19) Europäisches Patentamt European Patent Office Office européen des brevets

(11) **EP 3 573 509 B1**

(12) **EUROPEAN PATENT SPECIFICATION**

(45) Date of publication and mention
of the grant of the patent:
**19.10.2022 Bulletin 2022/42**

(21) Application number: **18763059.5**

(22) Date of filing: **06.03.2018**

(51) International Patent Classification (IPC):
*A47L 5/24* (2006.01)     *A47L 9/28* (2006.01)
*F04D 17/02* (2006.01)    *F04D 17/12* (2006.01)
*F04D 19/02* (2006.01)    *F04D 25/06* (2006.01)
*A47L 9/22* (2006.01)     *H02K 7/14* (2006.01)
*H02K 16/02* (2006.01)

(52) Cooperative Patent Classification (CPC):
**A47L 9/2842; A47L 5/24; A47L 9/22; A47L 9/2831;
F04D 17/025; F04D 17/12; F04D 19/024;
F04D 25/0606; H02K 7/14; H02K 16/02;**
H02K 11/21

(86) International application number:
**PCT/KR2018/002632**

(87) International publication number:
**WO 2018/164447 (13.09.2018 Gazette 2018/37)**

(54) **FAN UNIT AND CLEANER HAVING THE SAME**

GEBLÄSEEINHEIT UND REINIGER DAMIT

UNITÉ DE VENTILATEUR ET ASPIRATEUR LE COMPRENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.03.2017   JP 2017041211**
**28.12.2017   KR 20170181908**

(43) Date of publication of application:
**04.12.2019 Bulletin 2019/49**

(73) Proprietor: **Samsung Electronics Co., Ltd.**
**Suwon-si, Gyeonggi-do 16677 (KR)**

(72) Inventors:
• **YOSHIDA, Minoru**
**Yokohama-shi**
**Kanagawa 230-0027 (JP)**
• **ASHIMORI, Takeaki**
**Yokohama-shi**
**Kanagawa 230-0027 (JP)**

(74) Representative: **Gulde & Partner**
**Patent- und Rechtsanwaltskanzlei mbB**
**Wallstraße 58/59**
**10179 Berlin (DE)**

(56) References cited:
WO-A1-2017/003134     JP-A- 2008 169 725
JP-A- 2017 012 731      KR-B1- 100 213 571
KR-B1- 100 603 207      US-A1- 2014 086 761
US-B1- 6 232 696

**Description**

[Technical Field]

The present disclosure relates to a fan unit capable of effectively generating an air flow, and more particularly, to a fan unit mounted on a cleaner.

[Background Art]

Conventionally, a direct current (DC) motor on which a brush is mounted has been generally used in a cordless stick type cleaner using battery power. Because such a DC motor has low maximum revolutions of about 20,000 rpm and a compact size, there is a problem in that performance such as suction power and the like is much lower (generally about 10 to 20 W) than a conventional canister type cleaner.
For this reason, a cordless stick type cleaner capable of implementing high suction power using a brushless DC motor has recently emerged. Such a stick type cleaner mainly employs a built-in battery as a power source to enable the motor to be driven at high rotational speed of around 70,000 to 100,000 rpm, and thus convenience is high.
In addition, as performance of a lithium ion battery is improved, a small and light-weight battery outputting high power may be supplied, and thus demand for such a type of cleaner has increased. A cordless stick type electric cleaner is disclosed, for example, in Japanese Patent Laid-Open Publication No. 2015-159841 (Patent Document 1).
A publication of WO 2017/003134 A1 discloses a cleaner comprising a suction fan unit and a driving unit for driving the suction fan unit, wherein the driving unit comprises a driving motor comprising a plurality of rotors which rotate individually, and wherein the suction fan unit comprises a first fan which is rotated by a first rotor and a second fan which is rotated by a second rotor of the driving motor, the driving motor further comprising a common stator for the first rotor and the second rotor.

[Disclosure]

[Technical Problem]

However, a conventional stick type electric cleaner as in the above Patent Document 1 has a problem in that suction power at a time of operation is lower than a general cleaner.
That is, while suction power of a general canister-type electric cleaner is generally about 180 W, suction power of the conventional stick-type electric cleaner is about 100 W even in a strong mode operation, and thus it may not be determined that satisfactory performance is obtained.
For this reason, a stick type electric cleaner is treated as an auxiliary cleaner, and the canister type electric cleaner is still employed as a main cleaner in many cases. As a result, although there are many users who own the two types of cleaners described above, it is preferable for only the stick type electric cleaner to be sufficient as the owned cleaner.
To this end, although it is necessary to implement high suction power, for example, 100 W or more, in the stick type electric cleaner, an increase in size of a motor or a fan in a conventional configuration, as in the above Patent Document 1, is inevitable, and thus there is a problem in that a weight or size of the cleaner is increased which makes it difficult to handle the cleaner.
Therefore, it is an aspect of the present disclosure to provide a fan unit in which a structure of a fan and a driving source thereof is improved to realize stable and high-efficient fan driving, thereby obtaining a high suction force in a stick type electric cleaner.

[Technical Solution]

An aspect of the present disclosure is a cleaner comprising a fan unit, wherein the fan unit comprises: a first fan and a second fan disposed in a line on the same rotation axis wherein the second fan is configured to be rotated in a direction opposite to a direction in which the first fan is rotated; and a driving motor configured to drive the first fan and the second fan, the driving motor comprising, a first rotor connected to the first fan; a second rotor connected to the second fan; a stator disposed between the first rotor and the second rotor; wherein a first air gap is formed between the stator and the first rotor, a second air gap is formed between the stator and the second rotor, and a size of any one of the first air gap and the second air gap varies in a circumferential direction of the stator.
Preferably, at least one of the first fan or the second fan is an axial flow fan.
Preferably, at least one of the first fan or the second fan is a mixed flow fan or a centrifugal fan. Preferably, an outer diameter of the first fan is smaller than that of the second fan.

Preferably, the first rotor is an inner rotor located at an inner side of the stator in a radial direction; and the second rotor is an outer rotor located at an outer side of the stator in the radial direction.

Preferably, the first air gap is an inner air gap facing the inner rotor; and the second air gap is an outer air gap facing the outer rotor.

Preferably, the first air gap and the second air gap are nonuniform.

Preferably, the driving motor is a single-phase brushless direct current, DC, motor.

Preferably, the cleaner further comprises: a sensor configured to detect a rotational position of any one of the inner rotor and the outer rotor; and a processor configured to control rotation of the inner rotor and the outer rotor on the basis of position information detected by the sensor.

Preferably, the first fan comprises a plurality of first blades, the second fan is spaced apart from the first fan and comprises a plurality of second blades, and a direction in which the first blade is inclined, with respect to a driving shaft of the driving motor, differs from a direction in which the second blade is inclined with respect to the driving shaft of the driving motor.

Preferably, the cleaner further comprises: a running section including a suction port; and a manipulation section connected to the running section, wherein: the fan unit is disposed in the manipulation section to generate a suction force for suctioning dust through the suction port, the fan unit further comprises a case having an inlet into which air is introduced and an exhaust port through which the air introduced through the inlet is discharged, and the first fan is disposed closer to the inlet than the second fan.

Preferably, the first rotor is disposed to face an inner circumferential surface of the stator; and the second rotor is disposed to face an outer circumferential surface of the stator, wherein the first rotor is connected to the first fan by a driving shaft.

Preferably, the second rotor comprises a cylindrical outer core and a plurality of magnets coupled to an inner circumferential surface of the cylindrical outer core; and the second fan is coupled to one end portion of the cylindrical outer core.

Preferably, the plurality of first blades comprises: a plurality of main blades each having a plate shape; and a plurality of sub blades each having a length smaller than that of the main blade, wherein the plurality of main blades and the plurality of sub blades are spaced apart from each other and alternately disposed in a circumferential direction of the first fan.

[Advantageous Effects]

According to the fan unit of the present disclosure, stable and highly efficient fan driving may be implemented and it is possible to provide a high-performance stick-type electric cleaner.

[Description of Drawings]

For a more complete understanding of the present disclosure and its advantages, reference is now made to the following description taken in conjunction with the accompanying drawings, in which like reference numerals represent like parts:

FIG. 1 is a schematic view illustrating a stick-type vacuum cleaner according to an embodiment of the present disclosure;
FIG. 2 is a schematic view illustrating a fan unit;
FIG. 3 illustrates a side view of the fan mechanism;
FIG. 4 is a schematic view illustrating an inside of a front case housing the fan mechanism and a DC motor;
FIG. 5 illustrates a cross-sectional view of the DC motor;
FIG. 6 is a view illustrating a torque (a component of force) acting on an inner rotor;
FIG. 7 is a view illustrating a torque (a component of force) acting on an outer rotor;
FIG. 8 is a view illustrating a first state when power is not supplied;
FIG. 9 is a view illustrating a second state when power is not supplied;
FIG. 10 is a view illustrating changes of torque acting on the respective rotors when starting from the first state;
FIG. 11 is a view illustrating changes of torque acting on the respective rotors when starting from the second state;
FIG. 12 is a view illustrating the state of the start initiating position;
FIG. 13 is a view illustrating the start initiating position (stable point) of the inner rotor;
FIG. 14 is a view illustrating the start initiating position (stable point) of the outer rotor;
FIG. 15 is a view illustrating changes of torque acting on each rotor when starting from the start initiating position;
FIG. 16 is a view illustrating a result of measuring an air volume-static pressure characteristic of the contra-rotating fan;

[Best Mode]

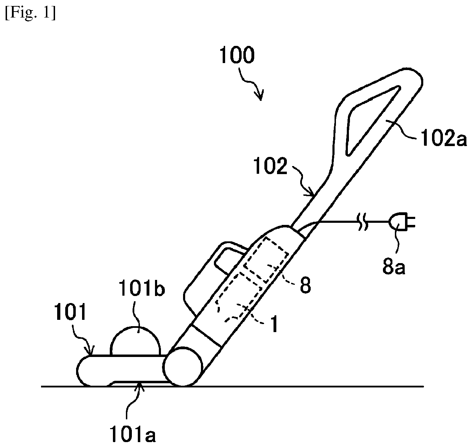

FIGS. 1 through 16, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

Hereinafter, embodiments of the present disclosure will be described in detail with reference to the accompanying drawings. However, the following description is merely example and is not intended to limit the present disclosure, its application, or its use. Meanwhile, in the following description, the term "front side" represents a suction port side of a cleaner, and the term "rear side" represents a handle side of the cleaner.

FIG. 1 shows a cleaner 100 to which a fan unit according to the present disclosure is applied. The cleaner 100 is a handy stick-type cleaner (also simply referred to as a "cleaner 100"), and includes a running section 101 and a manipulation section 102.

The running section 101 is a part running on a floor or the like, and a suction port 101a for suctioning dust is formed on a lower surface of the running section 101. A dust box 101b configured to receive the suctioned dust is detachably provided on an upper portion of the running section 101.

The manipulation section 102 is a stick-shaped part that is bendably connected to a rear portion of the running section 101, and a handle 102a is provided at a rear end portion of the manipulation section. A fan unit 1, a battery 8, or the like is accommodated in a lower portion of the manipulation section 102. The battery 8 is configured to be rechargeable through a power cord having a plug 8a attached to a front end thereof (the electric cord is accommodated in the manipulation section 102 when the cleaner is not in use). The fan unit 1 is operated by a supply of power from the battery 8, and forms an air flow to generate a suction force for suctioning dust from the suction port 101a.

The fan unit 1 has a compact (small-sized) shape that may be accommodated in the stick-shaped manipulation section 102, and a structure of the fan unit is designed to allow a powerful suction force (blowing force) to be efficiently obtained.

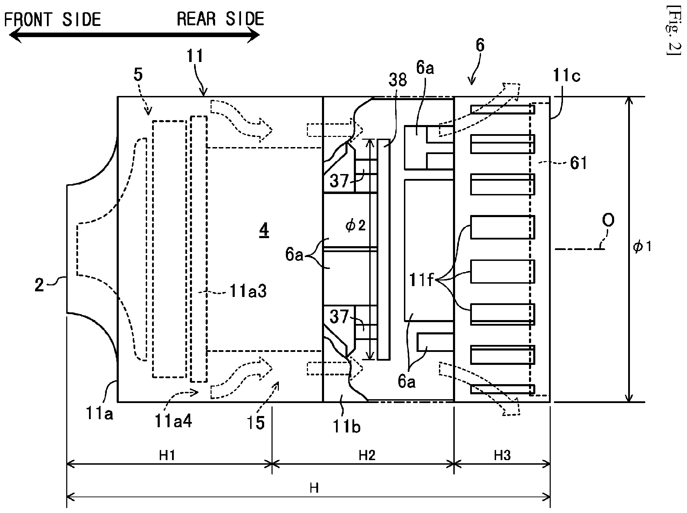

As shown in FIG. 2, the fan unit 1 includes a motor case 11 having one suction port 2 formed at a front end and a plurality of exhaust ports 11f formed in a rear end. A blowing path 15 for suctioning air from the suction port 2 and discharging air from the exhaust port 11f is formed in the motor case 11. In the blowing path 15, a fan mechanism 5, a direct current (DC) motor 4, and an electrical component accommodation part 6 are sequentially arranged in a row along a rotation axis O of the DC motor 4 from the front of the blowing path.

The motor case 11 includes a front case 11a covering the fan mechanism 5 and the DC motor 4, an intermediate case 11b connected to a rear side of the front case 11a, and a rear case 11c connected to a rear side of the intermediate case 11b.

The front case 11a is formed of or covered with, for example, an insulating material so that an insulation distance between the front case 11a and the DC motor 4 may be maintained to secure safety. The intermediate case 11b is made of, for example, aluminum, and is configured to cover a front side of the electrical component accommodation part 6. A rear side of the electrical component accommodation part 6 is covered with the rear case 11c. The plurality of exhaust ports 11f are formed at regular intervals in a circumferential direction in the rear case 11c.

The fan mechanism 5, the DC motor 4, and the electrical component accommodation part 6 all have the same outer diameter $\Phi 1$ (for example, $\Phi 1 = 70$ mm) and are integrally formed by being covered with the motor case 11 having a length H (for example, H = 110 mm).

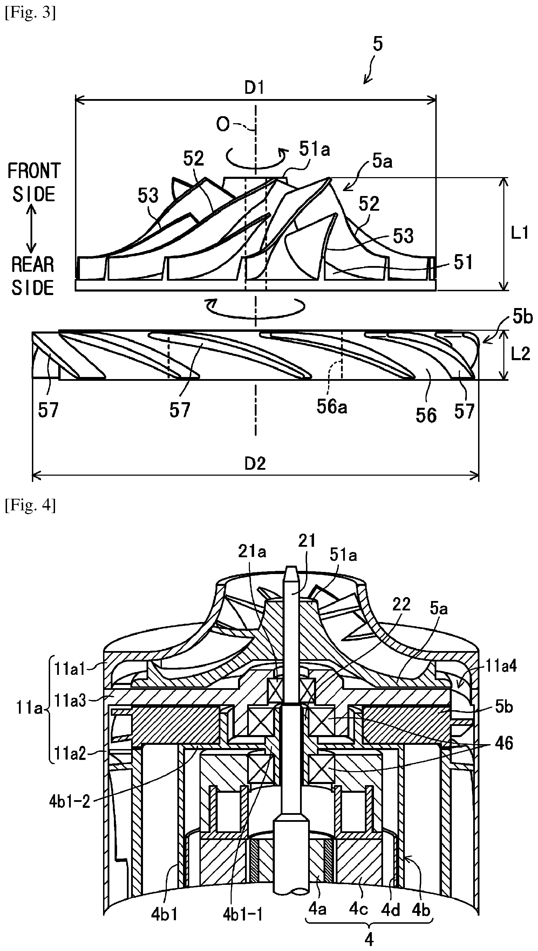

The fan mechanism 5 is shown in FIGS. 3 and 4. The fan mechanism 5 includes a first fan 5a and a second fan 5b disposed in series in a front-rear direction about the rotation axis O. Specifically, the first fan 5a is located farther at an upstream side of the blowing path 15 than the second fan 5b, and the second fan 5b is disposed at a rear side of the first fan 5a.

In the fan mechanism 5, a powerful suction force is obtained by using a combination of two fans having different shapes to increase a static pressure.

The first fan 5a is a centrifugal fan having an exterior of a truncated cone shape. The first fan 5a includes a base part 51, a plurality of main blades 52, and a plurality of sub blades 53. The base part 51 has a boss portion 51a formed at a center thereof, and an axial hole is formed in the boss portion. A surface (front surface) of the base part 51 is provided as an inclined surface inclined outwardly downward in a radial direction from the boss portion 51a toward an outer edge portion. The plurality of main blades 52 and the plurality of sub blades 53 are alternately formed on the surface of the base part 51 in parallel in a circumferential direction.

Each of the main blades 52 has a rectangular plate shape, and the plurality of main blades are formed in a standing state on the surface of the base part 51 at predetermined intervals in the circumferential direction. Each of the main blades 52 is disposed to extend from the boss portion 51a at the center of the base part 51 toward the outer edge portion and to be obliquely inclined in the same direction as a rotational direction of the first fan 5a. In addition, each of the main blades 52 is bent to be gradually curved from the boss portion at the center of the base part 51 toward the outer edge portion, and the main blade is provided in a state in which a side corresponding to the center of the base part is further inclined with respect to the surface of the base part 51 than a side corresponding to the outer edge portion of the base part (lying state).

Each of the sub blades 53 has a triangular plate shape and is formed in a standing state between two adjacent main blades 52 on the surface of the base part 51. Each of the sub blades 53 is formed to have a length smaller than that of the main blade 52, and each of the sub blades extends from the outer edge portion toward the center portion of the base part 51 and is inclined in the same shape as the main blade 52.

The second fan 5b is an axial flow fan having an annular exterior. The second fan 5b includes a base part 56 and a plurality of axial flow blades 57. The base part 56 has an annular shape with a thickness, and an axial hole 56a having a large diameter is formed at a center of the base part. Each of the axial flow blades 57 has a rectangular plate shape, and the plurality of axial flow blades are formed in a standing state on an outer circumferential surface of the base part 56 at predetermined intervals in a circumferential direction.

Each of the axial flow blades 57 is arranged to extend from an edge of a front side of the outer circumferential surface of the base part 56 toward an edge of a rear side and to be obliquely inclined in a direction which differs from the rotational direction of the first fan 5a (a direction opposite the main blade 52 and the sub blade 53 of the first fan 5a). In addition, each of the axial flow blades 57 is gently curved to allow a central portion thereof to protrude toward the front side.

That is, an inclination direction of each of the main blades 52 and each of the sub blades 53 of the first fan 5a with respect to the rotational center is opposite an inclination direction of the axial flow blade 57 of the second fan 5b with respect to the rotational center (contra-rotating fan).

Regarding sizes of the first fan 5a and the second fan 5b, a length of the first fan 5a in a direction in which the rotation axis O extends (the front-rear direction) is greater than that of the second fan 5b (L1 > L2), and an outer diameter of the second fan 5b is greater than that of the first fan 5a (D2 > D1).

By forming the first fan 5a and the second fan 5b to have the above sizes, it is possible to smoothly guide the air flow generated by the first fan 5a to the second fan 5b and to improve suction performance (blowing performance).

As shown in FIG. 4, the first fan 5a and the second fan 5b are accommodated in a front portion of the front case 11a. The front case 11a includes a first member 11a1 configured to accommodate the first fan 5a and a second member 11a2 configured to accommodate the second fan 5b and the DC motor 4. The first member 11a1 is formed in a truncated cone shape corresponding to the first fan 5a, and the second member 11a2 is formed in a cylindrical shape.

A supporting wall portion 11a3 disposed between the first fan 5a and the second fan 5b is formed at a front end portion of the second member 11a2 to which the first member 11a1 is connected. An opening is formed at a center of the supporting wall portion 11a3, and a rod-shaped shaft 21 is inserted into and passed through the opening. The shaft 21 is supported and may be freely rotated about the rotation axis O through an inner bearing 21a fitted in the opening.

By inserting a front end portion of the shaft 21 protruding forward from the supporting wall portion 11a3 into the axial hole of the boss portion 51a, the first fan 5a is fixed to the shaft 21. An opening 11a4 included in the blowing path 15 is formed on an outer circumference portion of the supporting wall portion 11a3.

The first fan 5a and the second fan 5b are configured to be rotated in opposite directions at a rotation ratio of 1:1 and to suppress energy loss caused by an air flow to obtain a high suction force.

That is, air suctioned from the suction port 2 by rotation of the first fan 5a is guided to the outside in a radial direction of the first fan while being turned, and is then guided to the second fan 5b through the opening 11a4. An opposite turning force generated by rotation of the second fan 5b is applied to the air flow guided to the second fan 5b so that the air flow is commutated again such that a turning component of the air flow is canceled out. Accordingly, only a straight-ahead component of the air flow remains and a liner air flow is formed. As a result, energy loss caused by turning may be reduced to increase a static pressure.

The first fan 5a and the second fan 5b are rotated by the DC motor 4.

Increasing a motor output is indispensable in generation of a powerful suction force by rotating the first fan 5a and the second fan 5b. As a result, consumption of the battery 8 is increased and a time for which the battery 8 may be operated on one charge is reduced, and thus there may be concern that usability is decreased.

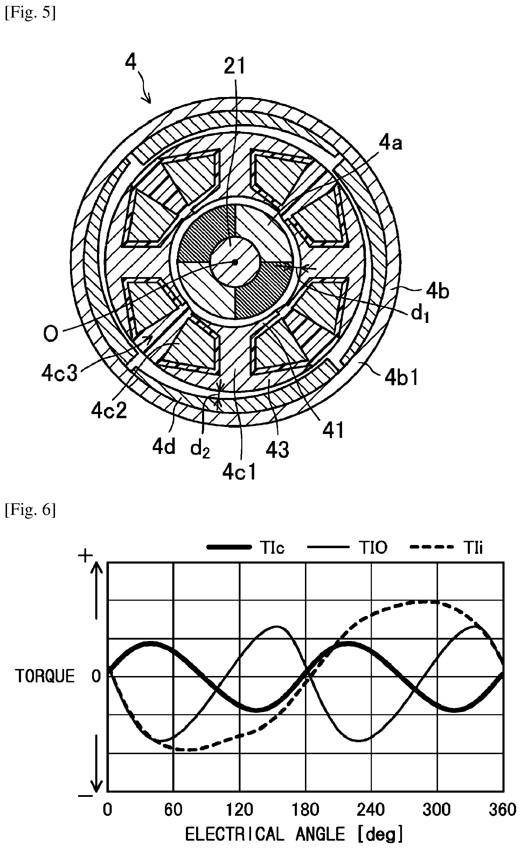

Therefore, in the fan unit 1 of the present disclosure, the DC motor 4 is configured to achieve high efficiency with a compact size. In other words, as shown in FIG. 4 or 5, the DC motor 4 is a brushless motor and includes one stator 4c and two rotors (dual rotors). Specifically, the DC motor 4 is provided with an inner rotor 4a, an outer rotor 4b, and the stator 4c.

The DC motor may be designed such that when the DC motor is driven by, for example, three-phase power, the inner rotor 4a and the outer rotor 4b are rotated in opposite directions at different rotation ratios, such as 1:2, 2:1, or the like. In the present embodiment, however, in order to implement a simple configuration, a single-phase driving is applied and the DC motor is designed such that the inner rotor 4a and the outer rotor 4b are smoothly and efficiently rotated in opposite directions (contra rotation) at a fixed rotation ratio of 1:1.

The inner rotor 4a is formed of a magnetized magnetic material having a cylinder shape with a small diameter.

As shown in FIG. 5, the inner rotor 4a is magnetized to allow two N poles and two S poles to be alternately disposed in a circumferential direction. That is, the number of poles of the inner rotor 4a is four. When viewed in an axial direction, a cross section of an outer circumferential surface of the inner rotor 4a is a complete circle, and a distance between the rotation axis O and the outer circumferential surface thereof is constant.

A through hole is formed at a center of the inner rotor 4a. A base end portion of the shaft 21 is fixedly inserted into the through hole. Accordingly, the inner rotor 4a is integrally connected to the first fan 5a by the shaft 21.

The stator 4c is formed in a cylindrical shape with a thick axial cross section around the rotation axis O and is fixed to the motor case 11. The stator 4c includes four element cores 4c1, four coils 4c2, and the like.

Each of the element cores 4c1 includes an arc-shaped inner teeth portion 41 facing the inner rotor 4a and extending in a circumferential direction, an arc-shaped outer teeth potion 43 facing the outer rotor 4b and extending in a circumferential direction, and a connection portion extending in a radial direction of the stator 4c to connect the inner teeth portion 41 and the outer teeth portion 43. The inner teeth portion 41 is disposed at an inner side of the outer teeth portion 43 with respect to the radial direction of the stator 4c.

Four slots 4c3 (spaces for accommodating wires) are formed between adjacent element cores 4c1. Each of the coils 4c2 is formed by a wire which is wound around the connection portion through the slot 4c3. Each of the element cores 4c1 and each of the coils 4c2 are embedded in a resin so that the element core and coil are integrally formed in a cylindrical shape (mold formation). An entire inner facing surface of the inner teeth portion 41 facing the inner rotor 4a and an outer facing surface of the outer teeth portion 43 facing the outer rotor 4b are exposed from the resin.

When viewed in an axial direction of an outer circumferential surface of the stator 4c, a cross section of the outer facing surface of each of the outer teeth portions is a complete circle, and a distance between the rotation axis O and the outer facing surface is constant. In contrast, a distance between the rotation axis O and the inner facing surface (having an arc-shaped cross section) of each of the inner teeth portions is not constant, and each of the inner teeth portions is configured to allow the distance between the rotation axis O and the inner facing surface to be gradually decreased from one end side toward the other end side in a circumferential direction.

Accordingly, a gap d1 (inner air gap) between the inner facing surface of each of the inner teeth portions 41 and the outer circumferential surface of the inner rotor 4a is configured to be gradually increased from one end portion thereof toward the other end portion so that the inner air gap is smallest at the one end portion in the circumferential direction (front end portion in a counterclockwise direction in FIG. 5) and is largest at the other end portion. Each of the inner gaps d1 is arranged to be rotationally symmetrical with respect to the rotation axis O.

As a result, the inner rotor 4a is more liable to receive to a magnetic force at the one end portion side in the circumferential direction at which the inner air gap d1 is small, and thus rotation is induced at the one end portion side, that is, in a counterclockwise direction in FIG. 5.

The outer rotor 4b includes a cylindrical outer core 4b1 having a large diameter and four outer magnets 4d. A cross section of an inner circumferential surface of the outer core 4b1 in an axial direction thereof is a complete circle, and a distance between the rotation axis O and the inner circumferential surface thereof is constant. A boss portion 4b1-1 located at a center of the outer core 4b1 and a fan attachment portion 4b1-2 disposed at an outer side of the boss portion in a radial direction are formed on an upper portion of the outer core 4b 1. A through hole having a diameter which is slightly greater than the shaft 21 is formed on the boss portion 4b1-1, and the shaft 21 is inserted into the boss portion through the through hole.

The second fan 5b is attached to the fan attachment portion 4b1-2. Accordingly, the outer rotor 4b is integrally connected to the second fan 5b through the outer core 4b1. The boss portion 4b1-1 is supported by the supporting wall portion 11a3 and the stator 4c via a pair of bearings 46 so that the outer rotor 4b is freely rotatable about the rotation axis O.

The pair of bearings 46 are arranged at a location overlapping at least a portion of the second fan 5b when viewed in a direction perpendicular to the rotation axis O. Thus, it is possible to stabilize rotation of the second fan 5b while improving layout flexibility.

The outer magnets 4d are arranged on the inner circumferential surface of the outer core 4b1 at regular intervals in a circumferential direction. In each of the outer magnets 4d, two N poles and two S poles are alternately arranged in the circumferential direction, and the same poles face each other. That is, the number of poles of the outer rotor 4b is four.

Each of the outer magnets 4d is formed such that a thickness thereof (size in a radial direction) is gradually reduced from one end side towards the other end side in the circumferential direction.

Accordingly, a gap d2 (outer air gap) between an inner circumferential surface of each of the outer magnets 4d and the outer circumferential surface of the stator 4c is configured to be gradually increased from one end portion thereof toward the other end portion so that the outer air gap is smallest at the one end portion in the circumferential direction (front end portion in a counterclockwise direction in FIG. 5) and is largest at the other end portion. The outer air gap d2 is disposed to be rotationally symmetrical with respect to the rotation axis O.

As a result, the outer rotor 4b is more liable to receive a magnetic force at the one end portion side in the circumferential direction at which the outer air gap d2 is small, and rotation of the outer rotor is induced in a direction opposite the direction in which the inner rotor 4a is rotated, that is, in a clockwise direction in FIG. 5. Since the inner rotor 4a and the outer rotor 4b which are being rotated are disposed on the inside and outside of the stator 4c which is not rotated, a rotational direction of the inner rotor 4a is opposite a rotational direction of the outer rotor 4b.

Since rotation of the inner rotor 4a and rotation of the outer rotor 4b are induced in opposite directions, as described above, contra rotation may be smoothly induced and efficiency is improved.

Further, productivity of the DC motor 4 is also improved. That is, in order to make the inner and outer air gaps d1 and d2 nonuniform, shapes of the inner teeth portion 41 and the outer teeth portion 43 of the element core 4c1 are not adjusted at the inside and the outside, respectively, but a shape of the outer magnet 4d is adjusted. Accordingly, the inner and outer air gaps d1 and d2 may be configured with high precision by a relatively simple operation.

The DC motor 4 includes two rotors having a magnetic force. Due to the above, in a non-excited state, a torque (magnetic gear torque) generated by magnetic forces of the inner rotor and the outer rotor in addition to a cogging torque caused by the stator 4c acts on each of the inner rotor 4a and the outer rotor 4b. When the DC motor is rotationally driven, an excitation torque generated by excitation of the coil 4c2 also acts on the inner rotor 4a and the outer rotor 4b.

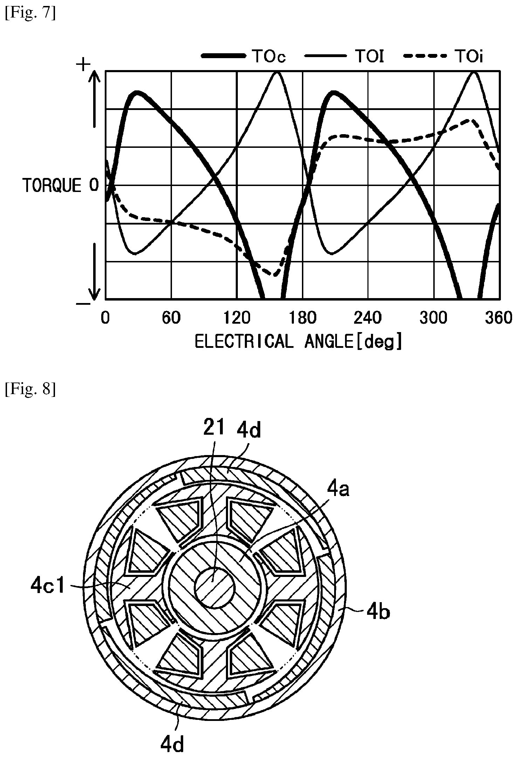

FIGS. 6 and 7 show components of force of a torque acting on the inner rotor 4a and the outer rotor 4b when the DC motor is rotationally driven. FIG. 6 shows the component of force acting on the inner rotor 4a, and FIG. 7 shows the component of force acting on the outer rotor 4b.

An excitation torque TIi generated due to excitation of the coil 4c2, a cogging torque TIc structurally generated between the inner rotor and the magnetic stator 4c, and a magnetic gear torque TIO structurally generated between the inner rotor and the outer rotor 4b act on the inner rotor 4a. Therefore, a torque TI($\theta$I) acting on the inner rotor 4a when the DC motor is rotationally driven is expressed as follows.

$$TI(\theta I) = TIi(\theta I) + TIc(\theta I) + TIO(\theta O)$$

Here, $\theta$I is an electrical angle of the inner rotor 4a, and $\theta$O is an electrical angle of the outer rotor 4b.

Similarly, an excitation torque TOi generated due to excitation of the coil 4c2, a cogging torque TOc structurally generated between the outer rotor and the magnetic stator 4c, and a magnetic gear torque TOI structurally generated between the outer rotor and the inner rotor 4a act on the outer rotor 4b.

Therefore, a torque TO($\theta$O) acting on the outer rotor 4b when the DC motor is rotationally driven is expressed as follows.

$$TO(\theta O) = TOi(\theta O) + TOc(\theta O) + TOI(\theta I)$$

Therefore, the inner rotor 4a and the outer rotor 4b are rotated by action of the torque TI($\theta$I) and the torque TO($\theta$O), respectively, when power is supplied.

In addition, the inner rotor 4a and the outer rotor 4b are stopped by action of the cogging torque and the magnetic gear torque when power is not supplied. In the DC motor 4 according to the present embodiment, however, there are two positions as the stop position.

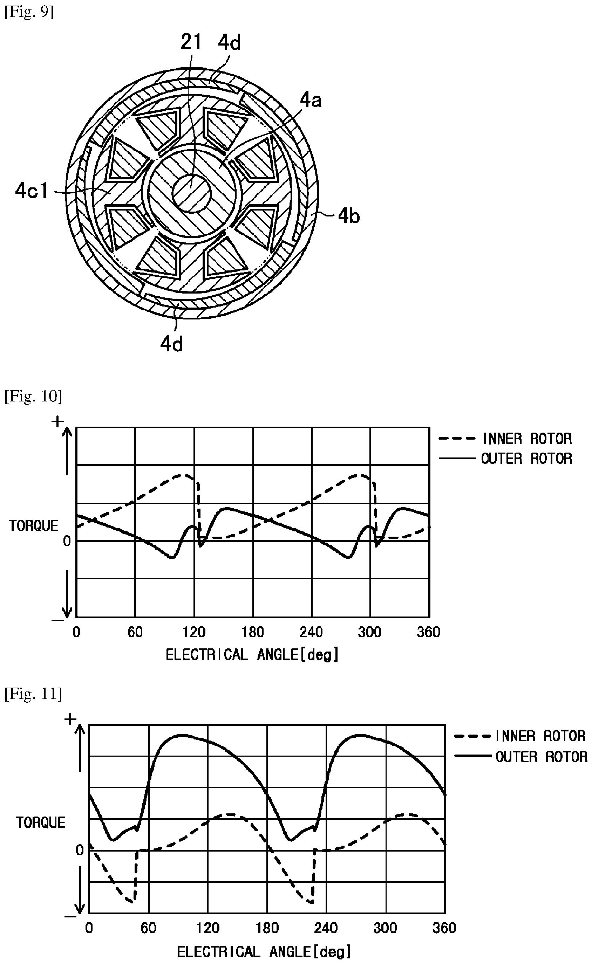

Specifically, the inner rotor 4a and the outer rotor 4b are balanced and stopped at two positions which are a position shown in FIG. 8 (first natural stop position) and a position shown in FIG. 9 (second natural stop position). Specifically, the inner rotor and the outer rotor are stopped at the positions of electrical angles $\theta$Ia and $\theta$Oa at which TI($\theta$Ia) (= TIc($\theta$Ia) + TIO($\theta$Oa)) becomes 0 and TO($\theta$Oa) (= TOc($\theta$Oa) + TOI($\theta$Ia)) becomes 0, respectively.

FIG. 10 shows changes in the torque TI($\theta$I) and the torque TO($\theta$O) when the DC motor 4 is started from the first natural stop position. In the drawing, a torque rotating the rotors in a proper direction is represented by a positive value (+) (this is also applied to the following drawings). As shown in FIG. 10, when the DC motor 4 is started from the first natural stop position, all of torques acting on the inner rotor 4a and the outer rotor 4b have a positive (+) value. That is, in this case, the torques act in directions in which contra rotation is generated.

FIG. 11 shows changes in the torque TI($\theta$I) and the torque TO($\theta$O) when the DC motor 4 is started from the second natural stop position.

As shown in FIG. 11, when the DC motor 4 is started from the second stop position, the torque acting on the inner rotor 4a has a negative (-) value. That is, in this case, the torque that is rotated in the same direction as the outer rotor 4b acts on the inner rotor 4a.

That is, the inner rotor 4a and the outer rotor 4b may be rotated in opposite directions or rotated in the same direction due to a position at which the inner rotor 4a and the outer rotor 4b are stopped prior to initiating start-up.

When the motor is a conventional single-phase motor having one rotor, since the stop point is one position, it is possible to stably start the motor, and it is possible to rotate the rotor in a certain direction by making at least any one of the air gaps be nonuniform.

In addition, when one rotor is employed, by applying a positive current when the rotor is located at an electrical angle of 0° to 180° and by applying a negative current when the rotor is located at an electrical angle of 180° to 360°, it is possible to continuously rotate the rotor.

However, when two rotors are employed, it is not possible to rotate both of the rotors in a certain direction unless both of the rotors are arranged in any one of electrical angle ranges of 0° to 180° and 180° to 360°.

Accordingly, the DC motor 4 of the present disclosure is configured such that, by supplying a certain induced current when start-up is initiated, the inner rotor 4a and the outer rotor 4b are guided to a predetermined start-up initiating position and rotation is started from the start-up initiating position.

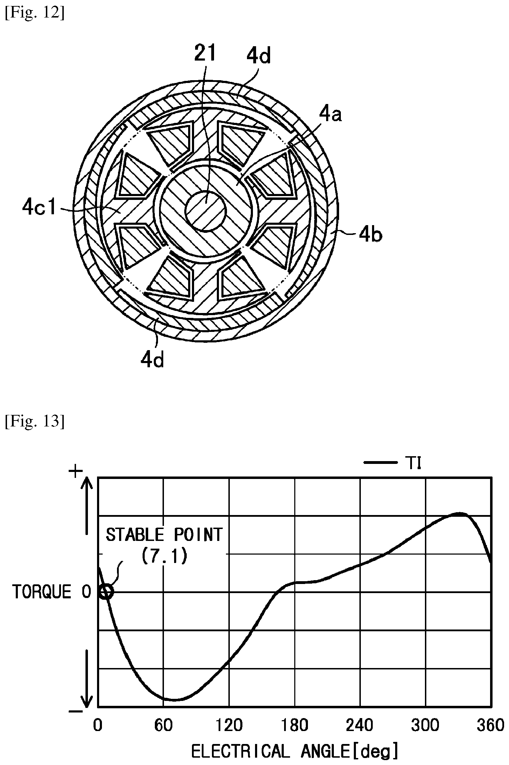

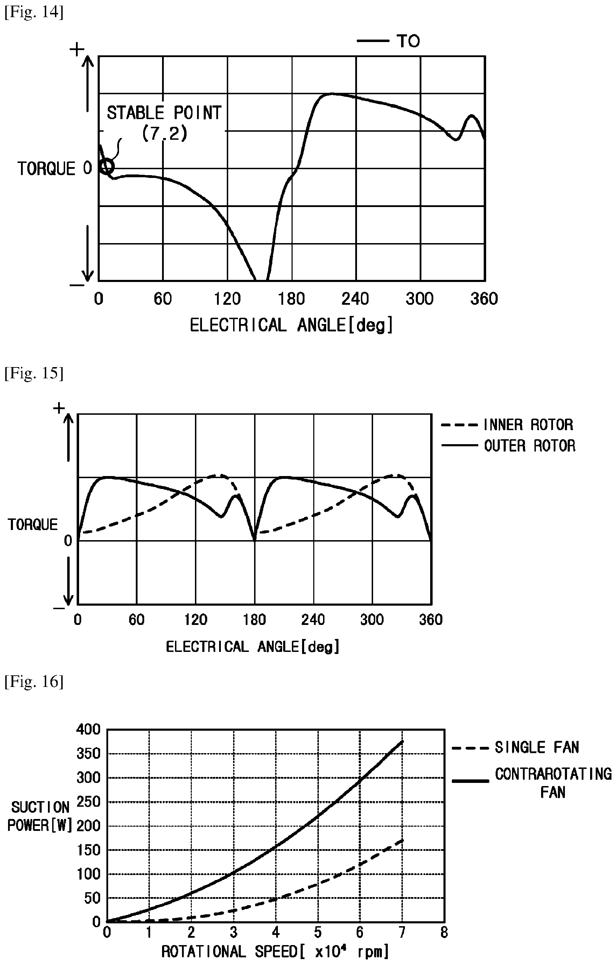

Specifically, a current of -30 A is applied as an induced current to guide the inner rotor 4a and the outer rotor 4b to a predetermined start initiating position, as shown in FIG. 12. That is, as shown in FIG. 13, the inner rotor 4a is guided to a predetermined start initiating position ($\theta$Ib = 7.1°) at which the torque is zero. In addition, as shown in FIG. 14, the outer rotor 4b is also guided to a predetermined start initiating position ($\theta$Ob = 7.2°) at which the torque is zero.

A balance of the torques acting on the inner rotor 4a and the outer rotor 4b at the above start initiating positions may be expressed as follows.

$$TI(\theta Ib) = TIi(\theta Ib) + TIc(\theta Ib) + TIO(\theta Ob) = 0$$

$$TO(\theta Ob) = TOi(\theta Ib) + TOc(\theta Ob) + TOI(\theta Ib) = 0$$

In addition, in order to make both the inner rotor 4a and the outer rotor 4b be rotated in a certain direction, the above start initiating positions are set to additionally satisfy conditions of $0 \leq \Theta Ib < 180$ and $0 \leq \Theta Ob < 180$ or $180 \leq \Theta Ib < 360$ and $180 \leq \Theta Ob < 360$. By setting the above start initiating positions as above, it is possible to arrange all of the inner rotor 4a and the outer rotor 4b in any one of the electrical angle ranges of 0° to 180° and 180° to 360° and rotate the inner rotor 4a and the outer rotor 4b in a certain direction.

FIG. 15 shows the torques acting on the inner rotor 4a and the outer rotor 4b when the motor is started from the start-up initiating position, which is set as described above.

As shown in FIG. 2, electrical components 6a, such as various kinds of capacitors, switching elements, or the like, are accommodated in the electrical component accommodation part 6. A driving circuit (driving processor) for driving the DC motor 4 is constituted by the electrical components 6a. An H-bridge circuit is employed in the driving circuit because of the single-phase driving. Generally, when two rotors are driven, two inverters are used in the driving circuit. However, one inverter is disposed in the driving circuit in the DC motor 4 of the present disclosure.

The driving circuit is provided with a position sensor (not shown) for detecting a rotational position of at least one of the inner rotor 4a and the outer rotor 4b. Rotation of each of the inner rotor 4a and the outer rotor 4b is controlled on the basis of position information detected by the position sensor.

In the electrical component accommodation part 6, an auxiliary board 38 and a main board 61 are arranged at an interval in the front-rear direction. The main board is disposed at a rear end portion of the motor case 11. The auxiliary board 38 is supported by the DC motor 4 through connection elements 37, and is disposed at an intermediate portion of the motor case 11.

Each of the auxiliary board 38 and the main board 61 is provided in a circular shape. A size $\Phi$2 of the auxiliary board is smaller than a diameter $\Phi$1 of the fan mechanism 5 ($\Phi$2 < $\Phi$1). Therefore, it is possible to prevent an air flow from being disturbed by the auxiliary board 38. The electrical components 6a are distributed on and attached to these auxiliary boards 38 and 61. By using the boards distributed and arranged as above, it becomes easy to cope with a high current.

A control program for controlling actuation of the DC motor 4 to operate the fan unit 1 is stored in the driving circuit.

Next, control of the actuation of the DC motor 4 and operation of the fan unit 1 will be described.

When operation of the cleaner 100 is started in accordance with a user's manipulation of a switch, a predetermined induced current is supplied to the stator 4c of the DC motor 4 according to control carried out by the driving circuit. Accordingly, the inner rotor 4a and the outer rotor 4b are guided to the predetermined start-up initiating positions

Thereafter, when the inner rotor 4a and the outer rotor 4b are stopped at the start-up initiating positions and a start of the DC motor is initiated after the stopping, a current for positioning the inner rotor 4a and the outer rotor 4b at the start-up initiating positions and a current for starting the inner rotor and the outer rotor from a state in which the rotors are positioned at the start-up initiating positions are used, and thus power consumption is increased.

Therefore, in the fan unit 1 according to one embodiment of the present disclosure, a driving current is supplied to the stator 4c immediately before the inner rotor 4a and the outer rotor 4b are stopped at the startup initiating positions. In this way, it is possible to suppress consumption of the battery 8 caused by an excessively induced current and smoothly rotate the inner rotor 4a and the outer rotor 4b in opposite directions.

When the inner rotor 4a and the outer rotor 4b are rotated, the first fan 5a and the second fan 5b are also rotated in opposite directions in response to the rotation of the inner and outer rotors. Rotational speeds of the first fan 5a and the second fan 5b are controlled on the basis of the position information detected by the position sensor. Since the first fan 5a and the second fan 5b are configured as contra-rotating fans, it is possible to implement a higher static pressure and obtain a higher suction force (blowing force) than in the case of a single fan.

Since the electrical component accommodation part 6 constitutes a portion of the blowing path 15 in the fan unit 1, a cooling effect on the electrical components 6a can be obtained without providing a cooling device.

A result of measuring an air volume-static pressure characteristic of the contra-rotating fan employed in the fan unit 1 is shown in FIG. 16. A comparative example is a conventional single fan (the first centrifugal fan in the embodiment). It can be seen that the contra-rotating fan can improve an overall air volume-static pressure characteristic when compared with the single fan.

In order to stabilize a start of the rotors, it is preferable for a difference between the start-up initiating position θIb of the inner rotor 4a and the start-up initiating position θOb of the outer rotor 4b to be as small as possible.

When a size difference of the air gap between the narrowest portion and the widest portion is small, an induced current is large, and problems such as demagnetization, current limit, or the like may occur. On the other hand, when the above difference is large, there is a problem in that magnetic efficiency is lowered. Therefore, it is preferable for an increased difference of the air gap to be set as 2.2 times the narrowest portion in the inner air gap and 2.8 times the narrowest portion in the outer air gap. In this way, an induced current can be set to -30 A, which is free from a problem such as demagnetization or and current limit.

Instead of the centrifugal fan, a mixed flow fan may be employed as the first fan 5a. The number of the main blades 52, the sub blades 53, and the axial flow blades 57 may be selected according to a specification. The first fan 5a and the second fan 5b may be configured to be rotated at different rotational speeds in the same direction.

A device to which the fan unit 1 may be applied is not limited to the cleaner 100. For example, the fan unit according to the present disclosure may be applied to a compact device that requires a powerful suction force or blowing force, such as an air conditioning facility, for example, an air conditioner.

Although the present disclosure has been described with various embodiments, various changes and modifications may be suggested to one skilled in the art. It is intended that the present disclosure encompass such changes and modifications as fall within the scope of the appended claims.

**Claims**

1. A cleaner (100) comprising a fan unit (1), wherein the fan unit (1) comprises:

   a first fan (5a) and a second fan (5b) disposed in a line on the same rotation axis (O) wherein the second fan (5b) is configured to be rotated in a direction opposite to a direction in which the first fan (5a) is rotated; and
   a driving motor (4) configured to drive the first fan (5a) and the second fan (5b), the driving motor (4) comprising,

   a first rotor (4a) connected to the first fan (5a);
   a second rotor (4b) connected to the second fan (5b);
   a stator (4c) disposed between the first rotor (4a) and the second rotor (4b);

   wherein a first air gap (d1) is formed between the stator (4c) and the first rotor (4a), a second air gap (d2) is formed between the stator (4c) and the second rotor (4b), and a size of any one of the first air gap (d1) and the second air gap (d2) varies in a circumferential direction of the stator (4c).

2. The cleaner (100) according to claim 1, wherein at least one of the first fan (5a) or the second fan (5b) is an axial flow fan.

3. The cleaner (100) according to claim 1, wherein at least one of the first fan (5a) or the second fan (5b) is a mixed flow fan or a centrifugal fan.

4. The cleaner (100) according to claim 1, wherein an outer diameter (D1) of the first fan (5a) is smaller than that (D2) of the second fan (5b).

5. The cleaner (100) according to claim 1, wherein:

   the first rotor (4a) is an inner rotor located at an inner side of the stator (4c) in a radial direction; and
   the second rotor (4b) is an outer rotor located at an outer side of the stator (4c) in the radial direction.

**6.** The cleaner (100) according to claim 5, wherein

the first air gap (d1) is an inner air gap facing the inner rotor; and
the second air gap (d2) is an outer air gap facing the outer rotor.

**7.** The cleaner (100) according to claim 1, wherein:
the first air gap (d1) and the second air gap (d2) are nonuniform.

**8.** The cleaner (100) according to claim 1, wherein the driving motor (4) is a single-phase brushless direct current, DC, motor (4).

**9.** The cleaner (100) according to claim 6, further comprising:

a sensor configured to detect a rotational position of any one of the inner rotor and the outer rotor; and
a processor configured to control rotation of the inner rotor and the outer rotor on the basis of position information detected by the sensor.

**10.** The cleaner (100) according to claim 1, wherein:

the first fan (5a) comprises a plurality of first blades (52, 53),
the second fan (5b) is spaced apart from the first fan (5a) and comprises a plurality of second blades (57), and
a direction in which the first blade is inclined, with respect to a driving shaft (21) of the driving motor (4), differs from a direction in which the second blade is inclined with respect to the driving shaft (21) of the driving motor (4).

**11.** The cleaner (100) according to claim 1, further comprising:

a running section (101) including a suction port (2, 101a); and
a manipulation section (102) connected to the running section (101),
wherein:

the fan unit (1) is disposed in the manipulation section (102) to generate a suction force for suctioning dust through the suction port (2, 101a),
the fan unit (10) further comprises a case having an inlet into which air is introduced and an exhaust port through which the air introduced through the inlet is discharged, and
the first fan (5a) is disposed closer to the inlet than the second fan (5b).

**12.** The cleaner (100) according to claim 1, wherein:

the first rotor (4a) is disposed to face an inner circumferential surface of the stator (4c); and
the second rotor (4b) is disposed to face an outer circumferential surface of the stator (4c),
wherein the first rotor (4a) is connected to the first fan (5a) by a driving shaft (21).

**13.** The cleaner (100) according to claim 12, wherein:

the second rotor (4b) comprises a cylindrical outer core and a plurality of magnets coupled to an inner circumferential surface of the cylindrical outer core; and
the second fan (5b) is coupled to one end portion of the cylindrical outer core.

**14.** The cleaner (100) according to claim 10, wherein the plurality of first blades (52, 53) comprises:

a plurality of main blades (52) each having a plate shape; and
a plurality of sub blades (53) each having a length smaller than that of the main blade (52),
wherein the plurality of main blades (52) and the plurality of sub blades (53) are spaced apart from each other and alternately disposed in a circumferential direction of the first fan (5a).

**Patentansprüche**

1. Reiniger (100), umfassend eine Gebläseeinheit (1), wobei die Gebläseeinheit (1) umfasst:

   ein erstes Gebläse (5a) und ein zweites Gebläse (5b), die in einer Linie auf derselben Rotationsachse (O) angeordnet sind, wobei das zweite Gebläse (5b) so ausgestaltet ist, dass es in einer Richtung gedreht wird, die einer Richtung, in der das erste Gebläse (5a) gedreht wird, entgegengesetzt ist; und
   einen Antriebsmotor (4), der so ausgestaltet ist, dass er das erste Gebläse (5a) und das zweite Gebläse (5b) antreibt, wobei der Antriebsmotor (4) umfasst:

   einen ersten Rotor (4a), der mit dem ersten Gebläse (5a) verbunden ist;
   einen zweiten Rotor (4b), der mit dem zweiten Gebläse (5b) verbunden ist;
   einen Stator (4c), der zwischen dem ersten Rotor (4a) und dem zweiten Rotor (4b) angeordnet ist;

   wobei ein erster Luftspalt (d1) zwischen dem Stator (4c) und dem ersten Rotor (4a) ausgebildet ist, ein zweiter Luftspalt (d2) zwischen dem Stator (4c) und dem zweiten Rotor (4b) ausgebildet ist und eine Größe eines aus dem ersten Luftspalt (d1) und dem zweiten Luftspalt (d2) in einer Umfangsrichtung des Stators (4c) variiert.

2. Reiniger (100) nach Anspruch 1, wobei es sich bei mindestens einem aus dem ersten Gebläse (5a) oder dem zweiten Gebläse (5b) um ein Axialgebläse handelt.

3. Reiniger (100) nach Anspruch 1, wobei es sich bei mindestens einem aus dem ersten Gebläse (5a) oder dem zweiten Gebläse (5b) um ein Mischstromgebläse oder um ein Zentrifugalgebläse handelt.

4. Reiniger (100) nach Anspruch 1, wobei ein Außendurchmesser (D1) des ersten Gebläses (5a) kleiner ist als derjenige (D2) des zweiten Gebläses (5b).

5. Reiniger (100) nach Anspruch 1, wobei:

   der erste Rotor (4a) ein Innenrotor ist, der sich in radialer Richtung an einer Innenseite des Stators (4c) befindet; und
   der zweite Rotor (4b) ein Außenrotor ist, der sich in radialer Richtung an einer Außenseite des Stators (4c) befindet.

6. Reiniger (100) nach Anspruch 5, wobei

   der erste Luftspalt (d1) ein innerer Luftspalt ist, der dem Innenrotor zugewandt ist; und
   der zweite Luftspalt (d2) ein äußerer Luftspalt ist, der dem Außenrotor zugewandt ist.

7. Reiniger (100) nach Anspruch 1, wobei:
   der erste Luftspalt (d1) und der zweite Luftspalt (d2) ungleichmäßig sind.

8. Reiniger (100) nach Anspruch 1, wobei es sich bei dem Antriebsmotor (4) um einen einphasigen bürstenlosen Gleichstrommotor, GS-Motor, (4) handelt.

9. Reiniger (100) nach Anspruch 6, ferner umfassend:

   einen Sensor, der so ausgestaltet ist, dass er eine Rotationsposition eines aus dem Innenrotor oder dem Außenrotor erfasst; und
   einen Prozessor, der so ausgestaltet ist, dass er die Rotation des Innenrotors und des Außenrotors auf der Grundlage der von dem Sensor erfassten Positionsinformationen steuert.

10. Reiniger (100) nach Anspruch 1, wobei:

    das erste Gebläse (5a) eine Mehrzahl von ersten Flügeln (52, 53) umfasst,
    das zweite Gebläse (5b) von dem ersten Gebläse (5a) beabstandet ist und eine Mehrzahl von zweiten Flügeln (57) umfasst und
    eine Richtung, in welcher der erste Flügel in Bezug auf eine Antriebswelle (21) des Antriebsmotors (4) geneigt ist, sich von einer Richtung, in welcher der zweite Flügel in Bezug auf die Antriebswelle (21) des Antriebsmotors (4) geneigt ist, unterscheidet.

11. Reiniger (100) nach Anspruch 1, ferner umfassend:

einen Fahrabschnitt (101) mit einer Ansaugöffnung (2, 101a); und
einen Handhabungsabschnitt (102), der mit dem Lauf ab schnitt (101) verbunden ist,
wobei:

die Gebläseeinheit (1) in dem Handhabungsabschnitt (102) angeordnet ist, um eine Saugkraft zum Ansaugen von Staub durch die Ansaugöffnung (2, 101a) zu erzeugen,
die Gebläseeinheit (10) ferner ein Gehäuse mit einem Einlass, in den Luft eingeleitet wird, und einer Auslassöffnung, durch welche die durch den Einlass eingeleitete Luft ausgestoßen wird, umfasst und
das erste Gebläse (5a) näher an dem Einlass angeordnet ist als das zweite Gebläse (5b).

12. Reiniger (100) nach Anspruch 1, wobei:

der erste Rotor (4a) so angeordnet ist, dass er einer inneren Umfangsfläche des Stators (4c) zugewandt ist; und
der zweite Rotor (4b) so angeordnet ist, dass er einer äußeren Umfangsfläche des Stators (4c) zugewandt ist,
wobei der erste Rotor (4a) über eine Antriebswelle (21) mit dem ersten Gebläse (5a) verbunden ist.

13. Reiniger (100) nach Anspruch 12, wobei:

der zweite Rotor (4b) einen zylindrischen Außenkern und eine Mehrzahl von Magneten, die mit einer inneren Umfangsfläche des zylindrischen Außenkerns gekoppelt sind, umfasst; und
das zweite Gebläse (5b) mit einem Endabschnitt des zylindrischen Außenkerns gekoppelt ist.

14. Reiniger (100) nach Anspruch 10, wobei die Mehrzahl von ersten Flügeln (52, 53) umfasst:

eine Mehrzahl von Hauptflügeln (52), die jeweils die Form einer Platte aufweisen; und
eine Mehrzahl von Nebenflügeln (53), die jeweils eine geringere Länge als diejenige des Hauptflügels (52) aufweisen,
wobei die Mehrzahl von Hauptflügeln (52) und die Mehrzahl von Nebenflügeln (53) voneinander beabstandet und abwechselnd in einer Umfangsrichtung des ersten Gebläses (5a) angeordnet sind.

Revendications

1. Aspirateur (100) comprenant une unité de ventilateur (1), l'unité de ventilateur (1) comprenant :

un premier ventilateur (5a) et un deuxième ventilateur (5b) disposés sur une ligne sur le même axe de rotation (O), le deuxième ventilateur (5b) étant conçu pour tourner dans un sens opposé à un sens dans lequel le premier ventilateur (5a) tourne ; et
un moteur d'entraînement (4) conçu pour entraîner le premier ventilateur (5a) et le deuxième ventilateur (5b), le moteur d'entraînement (4) comprenant

un premier rotor (4a) relié au premier ventilateur (5a) ;
un deuxième rotor (4b) relié au deuxième ventilateur (5b) ;
un stator (4c) disposé entre le premier rotor (4a) et le deuxième rotor (4b) ;

un premier entrefer (d1) étant formé entre le stator (4c) et le premier rotor (4a), un deuxième entrefer (d2) étant formé entre le stator (4c) et le deuxième rotor (4b), et les dimensions d'un quelconque entrefer parmi le premier entrefer (d1) et le deuxième entrefer (d2) variant dans un sens circonférentiel du stator (4c).

2. Aspirateur (100) selon la revendication 1, au moins un ventilateur parmi le premier ventilateur (5a) et le deuxième ventilateur (5b) étant un ventilateur axial.

3. Aspirateur (100) selon la revendication 1, au moins un ventilateur parmi le premier ventilateur (5a) et le deuxième ventilateur (5b) étant un ventilateur hélico-centrifuge ou un ventilateur centrifuge.

4. Aspirateur (100) selon la revendication 1, un diamètre extérieur (D1) du premier ventilateur (5a) étant inférieur à celui (D2) du deuxième ventilateur (5b).

5. Aspirateur (100) selon la revendication 1,

le premier rotor (4a) étant un rotor intérieur situé sur un côté intérieur du stator (4c) dans une direction radiale ; et
le deuxième rotor (4b) étant un rotor extérieur situé sur un côté extérieur du stator (4c) dans la direction radiale.

6. Aspirateur (100) selon la revendication 5,

le premier entrefer (d1) étant un entrefer intérieur faisant face au rotor intérieur ; et
le deuxième entrefer (d2) étant un entrefer extérieur faisant face au rotor extérieur.

7. Aspirateur (100) selon la revendication 1,
le premier entrefer (d1) et le deuxième entrefer (d2) étant non uniformes.

8. Aspirateur (100) selon la revendication 1, le moteur d'entraînement (4) étant un moteur monophasé sans balai à courant continu, CC, (4).

9. Aspirateur (100) selon la revendication 6, comprenant en outre :

un capteur conçu pour détecter une position de rotation d'un rotor quelconque parmi le rotor intérieur et le rotor extérieur ; et
un processeur conçu pour contrôler la rotation du rotor intérieur et du rotor extérieur, sur la base des informations de position détectées par le capteur.

10. Aspirateur (100) selon la revendication 1,

le premier ventilateur (5a) comprenant une pluralité de premières pales (52, 53),
le deuxième ventilateur (5b) étant à distance du premier ventilateur (5a) et comprenant une pluralité de deuxièmes pales (57), et
un sens dans lequel la première pale est inclinée, relativement à un arbre de commande (21) du moteur d'entraînement (4), différant d'un sens dans lequel la deuxième pale est inclinée, relativement à l'arbre de commande (21) du moteur d'entraînement (4).

11. Aspirateur (100) selon la revendication 1, comprenant en outre :

une section de déplacement (101) comprenant un port d'aspiration (2, 101a) ; et
une section de manipulation (102) reliée à la section de déplacement (101),
l'unité de ventilateur (1) étant disposée dans la section de manipulation (102) pour générer une force d'aspiration pour aspirer de la poussière par le port d'aspiration (2, 101a),
l'unité de ventilateur (10) comprenant en outre un boîtier ayant une admission dans laquelle de l'air est introduit et un port d'échappement par lequel l'air introduit par l'admission est évacué, et
le premier ventilateur (5a) étant disposé plus près de l'admission que le deuxième ventilateur (5b).

12. Aspirateur (100) selon la revendication 1,

le premier rotor (4a) étant disposé en face d'une surface circonférentielle intérieure du stator (4c) ; et
le deuxième rotor (4b) étant disposé en face de d'une surface circonférentielle extérieure du stator (4c),
le premier rotor (4a) étant relié au premier ventilateur (5a) par un arbre de commande (21).

13. Aspirateur (100) selon la revendication 12,

le deuxième rotor (4b) comprenant un noyau cylindrique extérieur et une pluralité d'aimants accouplés à une surface circonférentielle intérieure du noyau cylindrique extérieur ; et
le deuxième ventilateur (5b) étant accouplé à une partie d'extrémité du noyau cylindrique extérieur.

**14.** Aspirateur (100) selon la revendication 10, la pluralité de premières pales (52, 53) comprenant :

une pluralité de pales principales (52) ayant chacune une forme plate ; et
une pluralité de sous-pales (53) ayant chacune une longueur inférieure à celle de la pale principale (52),
la pluralité de pales principales (52) et la pluralité de sous-pales (53) étant à distance les unes des autres et
disposées de façon alternée dans un sens circonférentiel du premier ventilateur (5a).

[Fig. 1]

[Fig. 2]

FRONT SIDE    REAR SIDE

EP 3 573 509 B1

16

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

[Fig. 13]

[Fig. 14]

[Fig. 15]

[Fig. 16]

## REFERENCES CITED IN THE DESCRIPTION

**Patent documents cited in the description**

- JP 2015159841 A
- WO 2017003134 A1